# EUROPÄISCHE PATENTSCHRIFT

(11) **EP 3 073 126 B1**
(45) Veröffentlichungstag und Bekanntmachung des Hinweises auf die Patenterteilung: **14.03.2018**
(21) Anmeldenummer: 16000905.6
(22) Anmeldetag: 15.01.2011
(51) Int. Cl.: F15B 13/043

(54) **VENTILVORRICHTUNG**
VALVE DEVICE
DISPOSITIF DE SOUPAPE

(30) Priorität: 21.01.2010 DE 102010005228
(43) Veröffentlichungstag der Anmeldung: 28.09.2016
(62) Teilanmeldung aus: 11701201.3
(73) Patentinhaber: Hydac Fluidtechnik GmbH, 66280 Sulzbach/Saar (DE)
(72) Erfinder: Bruck, Peter, 66484 Althornbach (DE); Bill, Markus, 66265 Heusweiler (DE); Schulz, Frank, 66440 Blieskastel-Bierbach (DE)
(74) Vertreter: Bartels und Partner, Patentanwälte

(56) Entgegenhaltungen:
- WO-A1-03/034171
- DE-A1- 3 119 445
- DE-A1- 4 319 162
- DE-A1- 10 224 732
- DE-A1-102006 049 012
- DE-T2- 60 016 510

## Beschreibung

Die Erfindung betrifft eine Ventilvorrichtung mit einem Ventilgehäuse und mit einem, in einer Kolbenbohrung des Ventilgehäuses axial verschiebbar angeordneten Ventilkolben, gemäß der Merkmalsausgestaltung des Oberbegriffes des Patentanspruches 1.

Ventilvorrichtungen sind in einer Vielzahl von Ausführungsformen, beispielsweise als Mehrwegeventile, erhältlich. In Verbindung mit einer sog. elektromagnetischen Betätigung sind sie wichtiger Bestandteil der sog. Proportional-Ventiltechnik. Diese Technik ist im Wesentlichen dadurch charakterisiert, dass ein elektrisches Eingangssignal als Spannung in einem elektronischen Verstärker entsprechend der Spannungshöhe in einen elektronischen Strom umgesetzt wird. Proportional zu diesem elektrischen Strom erzeugt ein Proportionalmagnet als Schaltmagnet die Ausgangsgrößen Kraft oder Weg.

Diese Größen werden als Eingangssignal für die Ventilvorrichtung oder das Hydraulikventil eingesetzt und entsprechend proportional dazu einem bestimmten Volumenstrom oder einem bestimmten Druck. Für den jeweiligen angesteuerten Verbraucher und ein damit betätigtes Arbeitselement an einer Maschine bedeutet dies neben der Beeinflussung der Bewegungsrichtung die Möglichkeit der stufenlosen Beeinflussung der Geschwindigkeit und der Kraft. Gleichzeitig kann nach entsprechendem zeitlichen Verlauf, z.B. Änderung des Volumenstroms in der Zeit, die Beschleunigung oder Verzögerung stufenlos beeinflußt werden. Je nachdem, welche Funktion im Vordergrund steht, also die Wegefunktion, die Stromfunktion und/oder die Druckfunktion, findet die Proportional-Hydraulik Anwendung bei Wegeventilen, Stromventilen oder sog. Druckventilen.

Die technischen Vorteile der Proportional-Ventiltechnik liegen in den kontrollierten Schaltübergängen, der stufenlosen Steuerung der Sollwerte und der Reduzierung der hydraulischen Einrichtungen für bestimmte Steuerungsaufgaben. Ferner sind mit Proportionalventilen schnelle und exakte Bewegungsabläufe möglich bei gleichzeitiger Verbesserung der Genauigkeit der Steuerungsvorgänge.

Es hat sich jedoch gezeigt, dass die bekannten Ventilvorrichtungslösungen auch auf dem Gebiet der Proportional-Ventiltechnik für manche Steuerungsaufgaben, wie bei doppelt wirkenden hydraulischen Arbeitszylindern, bei denen unter Vermeidung mechanischer Kopplungsglieder die Ansteuerung für Positionieraufgaben erfolgt, noch Wünsche offen läßt, insbesondere im Hinblick auf die Funktionssicherheit des Gesamtsystems sowie des raschen Ansprechverhaltens.

Durch die DE 43 19 162 A1 ist eine Ventilvorrichtung bekannt mit zwei gegenüberliegenden, mit einem Ventilgehäuse verbundenen Betätigungsmagneten mit im Ventilgehäuse angebrachten Fluidanschlußstellen in Form mindestens eines Pumpenanschlusses P, mindestens zweier Verbraucher- oder Nutzanschlüsse A,B und mindestens zweier Tankanschlüsse T1, T2 und mit einem Ventilkolben, der radiale Vorsprünge aufweist, die jeweils einer Fluidanschlußstelle A,B,P,T1,T2 im Ventilgehäuse zuordenbar sind und fluidführenden Wegen zwischen den Vorsprüngen, wobei in einer Neutralstellung der Weg zu dem jeweils zuordenbaren Nutzanschluß A,B teilweise oder vollständig versperrt ist, oder wobei bei freigehaltenen Nutzanschlüssen A,B der jeweilige Pumpenanschluß P durch den zuordenbaren Vorsprung vollständig gesperrt wird. Die bekannte Lösung betrifft ein Hydraulikventil, das zum Steuern eines hydraulischen Aktuators in einem System zur Wankstabilisierung eines Kraftfahrzeuges verwendbar ist. Bei der bekannten Lösung ist jedoch nicht ausgeschlossen, dass etwaige Störeinflußgrößen das hydraulische Ventilsystem in nachteiliger Weise beeinflussen.

Durch die DE 31 19 445 A1 ist ein elektro-hydraulisches Steuerventil bekannt, mit einem Hauptgehäuse als Ventilgehäuse, das eine Axialbohrung umschließt, in der ein Ventilglied als Ventilkolben verstellbar ist. Die Enden des Ventilkolbens bestehen aus magnetisierbarem Material und dem Gehäuseteil sind als Betätigungseinrichtungen Solenoid-Vorrichtungen an den äußeren Enden der Axialbohrung zugeordnet, um durch Erregung der einen oder anderen Solenoid-Vorrichtung das Ventilglied in Richtung auf das eine oder andere Ende der Axialbohrung zu ziehen. Zur Kompensation von Störeinflußgrößen weist die dahingehend bekannte Lösung Druckmelderkolben auf, die den Ventilkolben an seinen beiden Enden durchgreifen. Trotz der Möglichkeit der Beeinflussung der Störeinflußgrößen über den jeweiligen Druckmelderkolben läßt diese bekannte Lösung noch Wünsche offen, was die vollständige Kompensation solcher Störungen anbelangt.

Die DE 600 16 510 T2 beschreibt ein vorgesteuertes Wegeventil mit Positionsermittlung, mit einem Gehäuse mit einer Anzahl von Anschlüssen und einer Kolbenbohrung, in der jeder Anschluß mündet. Ein Ventilkolben ist axial verschiebbar in der Kolbenbohrung zum Wechseln der Strömungswege zwischen den Anschlüssen geführt. Es sind ferner teilweise aufwendige Steuermittel zum Steuern des Ventilkolbens vorgesehen, wobei die Steuermittel ein Kolben auf jeder Seite des Ventilkolbens und ein oder zwei Vorsteuerventile zum Stellen des Ventilkolbens durch Steuern des auf die Kolben wirkenden Vorsteuerungsfluids umfassen. Ferner ist ein Magnet vorgesehen, der so an einer Seite des Ventilkolbens angebaut ist, dass er im Gleichlauf mit dem Ventilkolben verschoben werden kann. Der Magnet ist so angeordnet, dass er an mindestens einer Stelle des Ventilkolbens angrenzt. Es ist ferner ein Magnetsensor vorgesehen, der derart eingebaut ist, dass er die Magnetkraft des Magneten über die gesamte Verschiebestrecke des Ventilkolbens erfaßt.

Die bekannten, Ventilvorrichtungen benötigen Wegsensoren und eine Auswerte- und Regelelektronik. Sie sind somit insgesamt komplex im Aufbau und Störungen im Betrieb sind insoweit nicht ausgeschlossen.

Eine weitere Ventilvorrichtung ist aus der DE 102 24 739 A1 bekannt geworden. Bei der bekannten Ventilvorrichtung sind das Vorsteuerventil und der Vorsteuerraum jeweils in einem Steuerdeckel angeordnet, der an einer Seitenfläche des Ventilgehäuses angeordnet ist. Die Aufgabe, eine Steuerventileinrichtung zur Verfügung zu stellen, die einen geringen Bauraumbedarf in Längsrichtung des Steuerventils aufweist, wird hierbei dadurch gelöst, dass das Vorsteuerventil und/oder der Aktuator senkrecht zur Längsachse des Steuerventils in dem Steuerdeckel angeordnet ist. Der Aktuator ist hierbei an einer Seitenfläche des Steuerdeckels angeordnet. An einer gegenüberliegenden Seitenfläche des Steuerdeckels kann eine Einstellvorrichtung des Steuerventils angeordnet werden.

Durch DE 10 2006 049 012 A1 ist eine gattungsgemäße Ventilanordnung bekannt
- mit einem Ventilgehäuse,
- mit einem, in einer Kolbenbohrung des Ventilgehäuses axial verschiebbar angeordneten Ventilkolben, über den ein erster Verbraucheranschluß wechselweise mit einem Druckanschluß und mit einem Tankanschluß durch die Wirkung eines ersten Elektromagneten und eines zweiten Elektromagneten verbindbar sind,
- wobei der Ventilkolben aus einer zentrierten, mittleren Ruhestellung zur Verbindung des ersten Verbraucheranschlusses mit dem Druckanschluß und des zweiten Verbraucheranschlusses mit dem Tankanschluß in eine erste Richtung und zur umgekehrten fluidführenden Verbindung der Anschlüsse in eine entgegengesetzte Richtung verschiebbar ist,
- wobei eine Vorsteuerung vorgesehen ist, die einen ersten Vorsteuerraum aufweist, der eine erste Kolbenrückseite des Ventilkolbens mit einer Druckkraft beaufschlagt, und die einen zweiten Vorsteuerraum aufweist, der eine zweite Kolbenrückseite des Ventilkolbens mit einer Druckkraft beaufschlagt,
- wobei der erste und zweite Vorsteuerraum mit je einer fluidführenden Verbindung mit dem Druckanschluß verbindbar sind,
- wobei ein erster Vorsteuerkolben und ein zweiter Vorsteuerkolben vorgesehen sind, die jeweils eine fluidführende Verbindung zwischen den Vorsteuerräumen und dem Tankanschluß freigeben oder sperren,
- wobei die Vorsteuerung in der Art eines Schieberventils ausgebildet ist,
- wobei mindestens ein Vorsteuerkolben einen Ringkanal an seiner Außenumfangsfläche aufweist, der eine fluidführende Verbindung zwischen dem jeweiligen Vorsteuerraum und dem jeweils zugeordneten Tankanschluss steuert, und
- wobei der jeweilige Vorsteuerkolben von dem jeweils zugeordneten Elektromagneten mit einer Schubkraft beaufschlagbar ist, um ein Öffnen der fluidführenden Verbindung von dem jeweiligen Vorsteuerraum zu dem zugeordneten Tankanschluss zu bewirken.

Die bekannte Ventilanordnung dient der variablen Einspannung von hydraulischen Antrieben mit zwei separat betätigbaren Ventilschiebern, die in einer gemeinsamen Ventilbohrung geführt sind und die über eine Vorsteuerung verschiebbar und hydraulisch rückstellbar sind. Die hydraulische Rückstellung bewirkende Rückstellflächen sind mit dem Druckarm eines Druckanschlusses der Ventilanordnung beaufschlagt, wobei die wirksame Fläche der Rückstellflächen mit Flächendifferenz rückseitiger Steuerflächen ausgeführt sind.

Ausgehend von diesem Stand der Technik liegt der Erfindung die Aufgabe zugrunde, eine Ventilvorrichtung zu schaffen, die einfach im Aufbau ist und einen sicheren Betrieb, auch bei widrigen Betriebsbedingungen, ermöglicht.

Diese Aufgabe wird mit einer Ventilvorrichtung mit den Merkmalen des Patentanspruches 1 in seiner Gesamtheit gelöst.

Dadurch, dass gemäß dem kennzeichnenden Teil des Patentanspruches 1 von den jeweiligen Vorsteuerräumen fluidführende Verbindungen in Form schmaler Längskanäle mit je einem radialen, in der Länge kurz gehaltenen Stichkanal zum jeweiligen Ringkanal führen, und dass zu den fluidführenden Verbindungen von den Vorsteuerräumen kommend zu jeweils einem Tankanschluss jeweils weitere, den kürzeren Stichkanälen gegenüberliegende Stichkanäle und Längskanäle gehören, die zu dem jeweiligen Tankanschluss in dem Ventilgehäuse führen, wird durch die Magnetkraft des jeweiligen Elektromagneten der Vorsteuerkolben derart verschoben, dass der Ringkanal an dessen Außenumfangsfläche in Überdeckung mit beiden Stichkanälen kommt. Mit der dahingehenden Ventilanordnung ist ein vorgesteuertes Wegeventil realisiert, dass bei sehr niedrigem Vorsteuerdruck bereits die genannten fluidführenden Verbindungen ermöglicht.
Der jeweilige Vorsteuerkolben ist von dem jeweils zugeordneten Elektromagneten mit einer Schubkraft beaufschlagbar, um ein Öffnen der fluidführenden Verbindung von dem jeweiligen Vorsteuerraum zu dem zugeordneten Tankanschluß zu bewirken, wobei die fluidführende Verbindung von dem jeweiligen Vorsteuerraum über den Ringkanal an den jeweiligen Vorsteuerkolben zu dem jeweiligen Tankanschluss geöffnet ist.

Mindestens einer, vorzugsweise jeder Vorsteuerkolben weist an seinem Außenumfang einen Ringkanal auf. Der Ringkanal ermöglicht ein Verbinden eines vorsteuerraumseitigen Zuführkanals von Vorsteueröl mit einem Kanal zur Abfuhr von Vorsteueröl an den jeweiligen Tankanschluss eines jeden Vorsteuerventils. Wird die Vorsteuerung dahingehend geöffnet, dass Druckmittel oder Vorsteueröl von dem Vorsteuerraum über den Ringkanal zu einem Tankanschluss gelangt, kommt es zu einem Druckabfall auf der Rückseite des Ventilkolbens und der Ventilkolben wird in entgegengesetzter Richtung verschoben, da der andere Vorsteuerraum auf Pumpendruckniveau bleibt, so dass der Ventilkolben durch das sich einstellende Druckungleichgewicht in den Vorsteuerräumen sich in Richtung auf den jeweiligen Elektromagneten zubewegt.

Wird der dem ersten Vorsteuerkolben zugeordnete Elektromagnet betätigt, so öffnet der betreffende Vorsteuerkolben die fluidführende Verbindung zwischen dem ersten Vorsteuerraum und dem Tankanschluß. Druckmittel aus dem ersten Vorsteuerraum kann in einen Druckmitteltank entweichen. Dadurch wird der Ventilkolben durch die Kraft des Systemdruckes des Druckanschlusses in den zweiten Vorsteuerraum in Richtung auf den ersten, auf den Ventilkolben sich zu bewegenden Vorsteuerkolben bewegt, und ein entsprechender Verbraucheranschluß mit dem Druckanschluß verbunden. Ein anderer Verbraucheranschluß wird mit dem Tankanschluß verbunden. Der Vorsteuerkolben ist in der Art eines Schieberkolbens ausgebildet, so dass jedes Vorsteuerventil als Ventil, vorzugsweise ohne Dichtung, ausgeführt ist. Eine hemmende Reibung im Betrieb ist dadurch minimiert und ferner ist sichergestellt, dass das jeweilige Vorsteuerventil seine Drosselfunktion ungestört ausüben kann.

Eine etwaige Störeinwirkung auf den Ventilkolben durch Reibungs- oder Strömungskräfte kann ohne Steuerungs- oder Regelungsaufwand durch einen verstärkten Abfluß von Druckmittel aus dem ersten Vorsteuerraum ausgeglichen werden, wodurch der Ventilkolben sich weiter in Richtung der gewünschten Position verschiebt. Wird der elektrische Strom für den ersten Elektromagneten gesenkt oder abgeschaltet, so bewegt sich der Vorsteuerkolben, vorzugsweise zusätzlich durch einen Kraftspeicher bewirkt, in Richtung einer Sperrstellung der fluidführenden Verbindung zwischen dem ersten Vorsteuerraum und dem Tankanschluß. Der sich in dem ersten Vorsteuerraum wieder aufbauende Druck schiebt den Ventilkolben erneut in Richtung seiner Ruheposition.

Der Ventilkolben läßt sich in derselben beschriebenen Weise auch bei Bestromung des zweiten Elektromagneten in die entgegengesetzte Richtung axial verschieben. Auf diese Weise läßt sich der zweite Verbraucheranschluß mit dem Druckanschluß verbinden und der erste Verbraucheranschluß mit dem Tankanschluß. Es besteht ständig eine fluidführende Verbindung zwischen dem Druckanschluß und dem ersten und zweiten Vorsteuerraum. Das Druckmittel in den Vorsteuerräumen kann direkt auf die jeweilige Kolbenrückseite des Ventilkolbens wirken.

Bei einer bevorzugten Ausführungsform der erfindungsgemäßen Ventilvorrichtung sind die jeweiligen Vorsteuerräume fluidführend jeweils mit Stichkanälen verbunden, die in radialer Richtung das Ventilgehäuse durchgreifend an eine gemeinsame Druckanschlussbohrung angeschlossen sind, die in axialer Richtung das Ventilgehäuse vorzugsweise bis zu seinen beiden freien Stirnseiten hin durchgreift. Besonders bevorzugt bilden die Stichkanäle und die Druckanschlussbohrung eine erste und zweite fluidführende Verbindung für die beiden Vorsteuerräume aus und sind mit dem Steuer- oder Pumpenanschlussdruck beaufschlagbar. Auf diese Weise wird ein interner Druckausgleich zwischen den beiden Vorsteuerräumen erreicht sowie eine in einfacher Weise zu realisierende Beaufschlagung mit dem gewünschten Druck.

Bei einer bevorzugten Ausführungsform der erfindungsgemäßen Ventilvorrichtung ist zwischen dem Ventilkolben und jedem Vorsteuerkolben jeweils eine Druckfeder angeordnet, wobei der Kolbenhub des Ventilkolbens bei geöffneter Vorsteuerung proportional dem Magnetstrom der Magneteinrichtung ist. Die an den Ventilkolben angreifende Druckfeder meldet die Position des Ventilkolbens zurück an den jeweiligen Vorsteuerkolben, so dass etwaige Störgrößen, beispielsweise hervorgerufen durch Strömungskräfte, unmittelbar ausgeregelt werden können. Die Position des Ventilkolbens ist zudem direkt korreliert mit dem aufgebrachten Magnetstrom. An dem freien Ende der Druckfeder, das dem jeweiligen Vorsteuerkolben zugewandt ist, ist ein Anlagestück angeordnet, das mit dem freien Ende des jeweiligen Vorsteuerkolbens wiederum über eine Anlagekugel in Verbindung steht.

Die Anlagekugel erlaubt einen hemmfreien Betrieb beim Zusammenwirken von Vorsteuerkolben und Ventilkolben.

Jeweils eine weitere Druckfeder ist vorgesehen, die sich zum einen an einem Ventilgehäuseabsatz abstützt und zum anderen an einer Radialerweiterung des Vorsteuerkolbens, um so den Vorsteuerkolben mit seiner Radialerweiterung an einen Anschlagflansch des Ventilgehäuses zur Anlage zu bringen. Im unbestromten Zustand eines jeden Elektromagneten ergibt sich dadurch eine geschlossene Position des Vorsteuerkolbens bzw. dessen Ringkanal zwischen dem jeweiligen Vorsteuerraum und dem Tankanschluß. Die Verbindungskanäle, die die fluidführende Verbindung zwischen den jeweiligen Vorsteuerräumen und dem jeweiligen Tankanschluß über den jeweiligen Ringkanal an den Vorsteuerkolben darstellen, sind in dem Ventilgehäuse als Längskanäle und dazu quer verlaufenden Stichkanälen gebildet.

In einer Neutralstellung wird der Ventilkolben gehalten, indem auf beiden Kolbenrückseiten ein Kraftspeicher mit gleicher Druckkraft zusätzlich zu der gleichen Druckkraft des Druckmittels in den Vorsteuerräumen wirkt. Die beiden Kraftspeicher können Druckfedern sein. Um den Versorgungsdruck nicht unmittelbar von dem Druckanschluß abzugreifen, kann es zweckmäßig sein, von einem Verbraucheranschluß, der die Lastseite des Verbrauchers abbildet, über ein Wechselventil den Druckanschluß und somit die fluidführenden Verbindungen von dem Druckanschluß zu den Vorsteuerräumen mit zu verbinden. Dadurch ergibt sich auch ein möglicher Betrieb der Ventilvorrichtung bei einer abgeschalteten Druckmittelpumpe allein durch den Lastdruck an dem Verbraucher. Wird die Druckmittelpumpe wieder eingeschaltet, so sperrt das Wechselventil und der Druck am Druckanschluß wird direkt von der Pumpe auf die beiden Vorsteuerräume übertragen.

Um den jeweils höchsten verfügbaren Druck entweder von dem Druckanschluß oder den beiden lastseitigen Verbraucheranschlüssen auf die Vorsteuerräume als Vorsteuerdruck zu führen, können alle drei betreffenden Anschlüsse, also der Druckanschluß, erster Verbraucher- sowie zweiter Verbraucheranschluß, über je ein Rückschlagventil an eine Sammelleitung zu der fluidführenden Verbindung zu den Vorsteuerräumen angeschlossen sein.

Zur Zentrierung des Ventilkolbens in seiner neutralen, mittigen Ruhestellung in der Kolbenbohrung und zur Rückführung des Ventilkolbens bei einer Auslenkung desselben können zusätzlich in jeden Vorsteuerraum je ein Kraftspeicher oder insbesondere eine Druckfeder eingesetzt sein.

Eine symmetrische und damit einfach zu fertigende Ausführungsform der Ventilvorrichtung ergibt sich, indem in Bezug auf die Längsachse des Ventilgehäuses eine mittige Position des Druckanschlusses von der Druckmittelpumpe gewählt wird. Zu beiden Seiten des Druckanschlusses schließen sich der erste und der zweite Verbraucheranschluß und ein erster und zweiter Tankanschluß mit jeweils vorzugsweise gleichem Abstand zu dem Druckanschluß an. Ein Druckanschluß für die Beaufschlagung der Vorsteuerräume kann separat an dem Ventilgehäuse vorgesehen sein und sich zu den beiden Vorsteuerräumen hin aufzweigen.

Im Folgenden wird die erfindungsgemäße Ventilvorrichtung anhand verschiedener Ausführungsformen nach der Zeichnung näher erläutert. Dabei zeigen in prinzipieller und nicht maßstäblicher Darstellung die
- Fig.1: einen Längsschnitt durch eine erste Ausführungsform der erfindungsgemäßen Ventilvorrichtung;
- Fig.2: einen Längsschnitt durch eine weitere zweite Ausführungsform der erfindungsgemäßen Ventilvorrichtung;
- Fig.3: einen Längsschnitt durch eine weitere dritte Ausführungsform der erfindungsgemäßen Ventilvorrichtung;
- Fig.4: in vergrößerter Darstellung ein in Fig.1 mit IV umrandetes Detail.

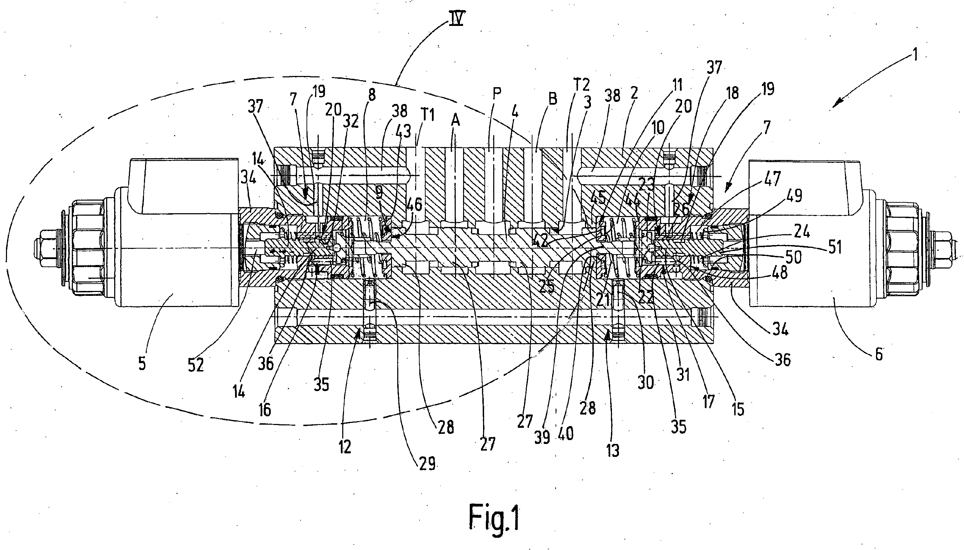

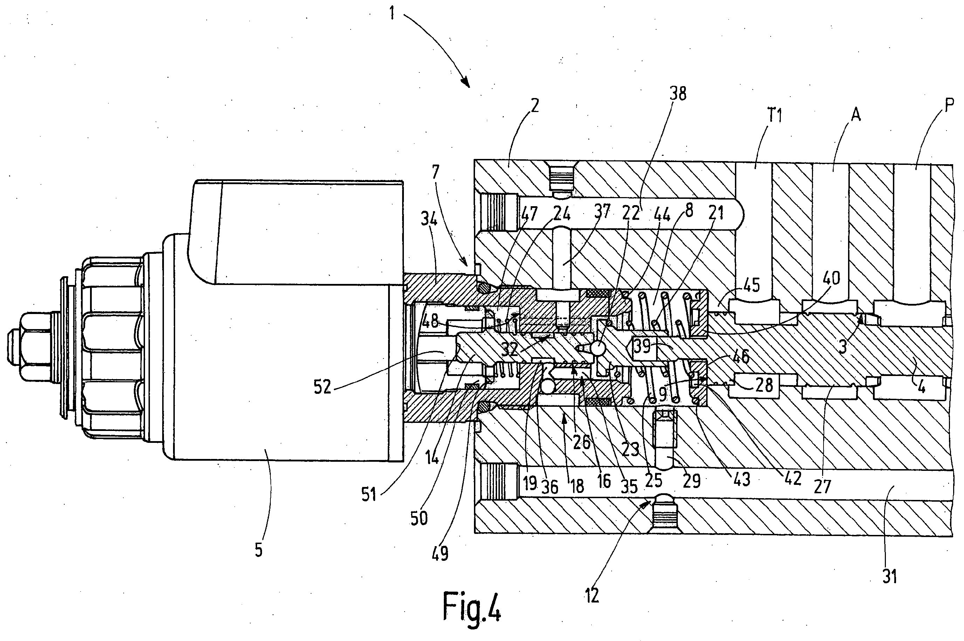

In der Fig.1 und gemäß der Detaildarstellung nach der Fig.4 ist jeweils in einem schematischen, nicht maßstäblichen Längsschnitt eine Ventilvorrichtung 1 zur Steuerung von Druckmittel, wie Hydrauliköl, zu einem nicht näher dargestellten Verbraucher gezeigt. Die Ventilvorrichtung 1 weist ein Ventilgehäuse 2 auf, das im wesentlichen zylindrisch ausgebildet ist. In dem Ventilgehäuse 2 ist eine Durchgangsbohrung, die als Kolbenbohrung 3 oder Führungszylinder für einen Ventilkolben 4 ausgebildet ist, entsprechend eingebracht. Zur indirekten Betätigung des Ventilkolbens 4 sind zu beiden Seiten des Ventilgehäuses 2 ein erster und ein zweiter Elektromagnet 5,6 in nicht näher gezeigter und beschriebener Weise in je einer Zentrierbohrung in dem Ventilgehäuse 2 angebracht. Die Elektromagnete 5,6 sind als Proportionalmagnete ausgebildet. In dem Ventilgehäuse 2 sind ferner Fluidanschlußstellen eingebracht in Form von mindestens einem Pumpen- oder Druckanschluss P, zweier Verbraucheranschlüsse A, B sowie zweier Tankanschlüsse T1, T2. Der in dem Ventilgehäuse 2 längsverfahrbar geführte Ventilkolben 4 weist außenumfangsseitig radiale Vorsprünge 27,28 auf. Der jeweilige radiale Außenumfang des jeweiligen Vorsprungs ist dabei derart gewählt, dass er dichtend an der Innenumfangsseite der Kolbenbohrung 3 abgleiten kann.

In den Ausführungsbeispielen der Fig. 1 bis 4 sind die beiden mittleren Vorsprünge 27 den Verbraucheranschlüssen A, B und die beiden axial an den Enden des Ventilkolbens 4 angeordneten Vorsprünge 28 den Tankanschlüssen T1 und T2 zugeordnet. Zwischen den Vorsprüngen 27,28 ist der Ventilkolben 4 im Durchmesser reduziert, so dass fluidleitende Wege zwischen dem Innenumfang des Ventilgehäuses 2 und dem jeweils reduzierten Außendurchmesser des Ventilkolbens 4 gebildet sind.

Auf seinen beiden gegenüberliegenden Seiten weist das Ventilgehäuse 2 jeweils eine Vorsteuerung 7 mit einem ersten Vorsteuerraum 8 und einem zweiten Vorsteuerraum 10 auf, deren jeweiliges Volumen mittels des verschiebbaren Ventilkolbens 4 veränderbar ist. Die jeweiligen Vorsteuerräume 8,10 sind fluidführend jeweils mit Stichkanälen 29,30 verbunden, die in radialer Richtung das Ventilgehäuse 2 durchgreifend an eine gemeinsame Druckanschlußbohrung 31 angeschlossen sind, die in axialer Richtung das Ventilgehäuse 2 bis zu seinen beiden freien Stirnseiten hin durchgreift. Die Stichkanäle 29,30 und die Druckanschlußbohrung 31 bilden eine erste und zweite fluidführende Verbindung 12,13 für die beiden Vorsteuerräume 8,10 aus und sind mit dem Steuer- oder Pumpenanschlußdruck P beaufschlagbar.

Die Vorsteuerung 7 selbst ist in der Art eines Schieberventils 18 ausgebildet, bei dem ein erster und zweiter Vorsteuerkolben 14,15 in einer entsprechenden, im Querschnitt kreisförmigen und im Durchmesser gegenüber der Längsbohrung 3 für den Ventilkolben 4 kleineren Längsbohrung 32 in dem Ventilgehäuse 2 längsverschiebbar geführt. Jeder Vorsteuerkolben 14,15 ist außenumfangsseitig von Druckentlastungsrillen umgeben, die zumindest teilweise die Leckagefreiheit in diesem Axialbereich für die Vorsteuerkolben 14,15 sicherstellen und insoweit eine Art Dichtsystem 26 ausbilden. Im übrigen verkürzen die Druckentlastungsrillen die wirksame Spaltlänge des Dichtspaltes und verringern mithin die Klemmneigung.

In Längsrichtung der Ventilanordnung 1 betrachtet ist zwischen jeweils einer Kolbenrückseite 9,11 des Ventilkolbens 4 und einem die Elektromagnete 5,6 haltenden Ventileinsatz 34 der Vorsteuerraum 8,10 angeordnet, der sich insoweit an das jeweilige Ende des Ventilkolbens 4 anschließt. Von den jeweiligen Vorsteuerräumen 8,10 führen weitere fluidführende Verbindungen 16,17 zunächst in Form schmaler Längskanäle 35 mit je einem radialen, in der Länge sehr kurz gehaltenen Stichkanal 36 zu einem Ringkanal 19, der an der jeweiligen Außenumfangsfläche 20 eines jeden Vorsteuerkolbens 14,15 angeordnet ist.

Zu den fluidführenden Verbindungen 16,17 von den Vorsteuerräumen 8,10 kommend zu jeweils einem Tankanschluß T1, T2 gehören jeweils weitere, den kürzeren Stichkanälen 36 diametral in dem Ventilgehäuse 2 gegenüberliegende Stichkanäle 37 und Längskanäle 38, die zu dem jeweiligen Tankanschluß T1, T2 in dem Ventilgehäuse 2 führen.

In den Fig.1 bis 4 befindet sich der Ventilkolben 4 in seiner geschlossenen Schaltstellung.

Der Ventilkolben 4 weist einen zapfenartigen, im Durchmesser kleineren Fortsatz 39 auf gegenüber seinem sonstigen Durchmesser. Der an beiden Enden des Ventilkolbens 4 einstückig mit dem Ventilkolben 4 gebildete Fortsatz 39 ragt jeweils axial bis etwa zur Mitte der jeweiligen Vorsteuerräume 8,10. Jeder Fortsatz 39 durchragt dabei eine Anschlagscheibe 40 eines jeweiligen Anlagestücks 23. Das jeweilige Anlagestück 23 hat an seinem, dem jeweiligen Fortsatz 39 abgewandten Ende eine scheibenartige Erweiterung, die jeweils eine Anlagekugel 22 in einer entsprechenden Aussparung trägt. Das freie Ende eines jeden Vorsteuerkolbens 14,15 stützt sich insoweit an der Anlagekugel 22 ab. Auf diese Weise ist ein hemmfreier Betrieb und Ansteuerung zwischen Vorsteuerkolben 14,15 und dem Ventilkolben 4 erreicht auch bei etwaig auftretenden Verkantungsvorgängen, die insoweit dann durch die Anlagekugel 22 ausgleichbar sind. Über den Fortsatz 39 in Verbindung mit dem jeweiligen Anlagestück 23 kann eine hydrodynamische Dämpfung realisiert werden. Sollte man für die Anwendung keine Dämpfung benötigen, wird das Bauteil 23 nur als Federteller ausgeführt. Diese Hülse wird dann kürzer ausgeführt, um sie nicht über den Kolben zu stülpen.

Zwischen dem Ventilkolben 4 und dem Anlagestück 23 ist jeweils eine Druckfeder 21 angeordnet. Die schraubenzylinderartige Druckfeder 21 stützt sich zum einen in einer ersten stirnseitigen Ringnut 42 einer jeden Anschlagscheibe 40 ab. Zum anderen stützt sich die jeweilige Druckfeder 21 an dem jeweiligen scheibenartigen Ende des Anlagestücks 23 ab. Die Druckfeder 21 weist einen geringeren Durchmesser auf als jeweils eine weitere Druckfeder 25, die sich an der Anschlagscheibe 40 und an dem jeweiligen Ventileinsatz 34 abstützt. Die Druckfeder 25 liegt zentriert in einer Ringnut 43 in der Anlagescheibe 40 und in einer Ringnut 44, die am freien Ende des Ventileinsatzes 34 angeordnet ist. Sie umschließt die jeweilige Druckfeder 21 radial. Durch die genannte Druckfeder 25 ist die Anschlagscheibe 40 an eine Durchmesserverengung 45 des Vorsteuerraumes 8,10 sowie an eine jeweilige Endfläche 46, aus der sich der Fortsatz 39 erhebt, gedrückt. Durch die dahingehende Anordnung ist eine eindeutig reproduzierbare Neutralstellung für den Ventilkolben 4 erreicht.

Es ist jeweils eine weitere dritte Druckfeder 24 vorgesehen, um den jeweiligen Vorsteuerkolben 14,15 in eine "Geschlossen-Position" zu bewegen. Zu diesem Zweck ist ein Ringraum 47 in dem Ventileinsatz 34 vorgesehen. An einem Boden 48 des jeweiligen Ringraumes 47 stützt sich die jeweilige Druckfeder 24 ab sowie an einer Radialerweiterung 49 des jeweiligen Vorsteuerkolbens 14,15. Dergestalt drückt die jeweilige Druckfeder 24 die Radialerweiterung 49 an einen jeweiligen Anschlagbund 50 eines Schraubsockels, über den der jeweilige Elektromagnet 4,5 in den jeweiligen Ventileinsatz 34 eingeschraubt ist. Das freie Ende 51 des jeweiligen Vorsteuerkolbens 14,15 ist in Anlage mit einem freien Ende eines Betätigungsstößels 52 eines jeden Elektromagneten 5,6.

Des besseren Verständnisses wegen wird das erfindungsgemäße Ausführungsbeispiel einer Ventilanordnung gemäß der Darstellung in der Fig.1 von seiner Funktion her betreffend die Vorsteuerung, näher beschrieben.

Wird der Elektromagnet 5 bestromt, so wandert ein nicht näher dargestellter Magnetanker unter der Feldwirkung einer nicht gezeigten Spulenwicklung und damit auch der Betätigungsstößel 52 aus dem Polrohr der Magneteinrichtung in Blickrichtung gesehen nach rechts. Dadurch erfährt der Vorsteuerkolben 14 einen Schub entgegen der Wirkung der Druckfeder 24 sowie der Druckfeder 21, die mit ihren Rückstellkräften die Tendenz haben, die Radialerweiterung 49 in Anlage mit dem Anschlagbund 50 zu halten. Die genannte Magnetkraft reicht aus, entgegen der Wirkung der Druckfedern 21,24 den Vorsteuerkolben 14 derart zu verschieben, dass der Ringkanal 19 an dessen Außenumfangsfläche 20 in Überdeckung mit dem Stichkanal 36 sowie dem Stichkanal 37 kommt. Dadurch wird die Vorsteuerung 7 dahingehend geöffnet, dass Druckmittel oder Vorsteueröl von dem Vorsteuerraum 8 über den Längskanal 38 zu dem Tankanschluß T1 gelangt. Hierbei kommt es zum Druckabfall auf der Rückseite 9 des Ventilkolbens 4 und der Ventilkolben 4 wird entgegen der Wirkung der Druckfeder 21 in Blickrichtung auf die Rig.1 gesehen nach links verschoben, da der zweite Vorsteuerraum 10 auf Pumpendruckniveau P bleibt, so dass der Ventilkolben 4 durch das sich einstellende Druckungleichgewicht in den Vorsteuerräumen 8,10 sich in Richtung auf den ersten Elektromagneten 5 zubewegt. Die in den Figuren gestrichelt dargestellte Längsbohrung im Ventileinsatz 34 stellt den Druckausgleich zwischen Vorsteuerkammer und Polrohr her, damit der Vorsteuerkolben 14 im Kräftegleichgewicht ist.

Der dahingehende Kolbenhub des Ventilkolbens 4 ist proportional der Magnetkraft des Elektromagneten 5. Die Druckfeder 21 meldet die Position des Ventilkolbens 4 zurück auf den Vorsteuerkolben 4, so dass Störgrößen, wie beispielsweise Strömungskräfte, dergestalt ausgeregelt werden können und die Position des Ventilkolbens 4 entspricht somit immer der Magnetkraft des Elektromagneten 5 im bestromten Zustand.

Wird die Bestromung des ersten Elektromagneten gesenkt oder aufgehoben, so kehrt der Ventilkolben 4 unter der Wirkung der Druckfedern 21 und 25 in seine Ausgangsposition zurück. Derselbe Ablauf in umgekehrter Richtung ergibt sich bei Bestromung des zweiten Elektromagneten 6. Der Verbraucheranschluß B gelangt mit dem Tankanschluß T2 in fluidführende Verbindung und der Verbraucheranschluß A gelangt mit dem Druckanschluß P in fluidführende Verbindung.

Mit der dahingehenden Ventilanordnung 1 ist mithin ein vorgesteuertes Wegeventil realisiert, das bei sehr niedrigem Vorsteuerdruck bereits die genannten fluidführenden Verbindungen ermöglicht. Die Druckfeder 21 ist nicht zwingend erforderlich; sie verbessert aber das Zurückschalten des Vorsteuerkolbens 14,15 und damit insgesamt die Dynamik für die Ventilanordnung 1. Insbesondere dient die Druckfeder 21 zur Rückmeldung der Kolbenposition als Kraft ins Magnetsystem. Die realisierte Vorsteuerung 7 ist in der Art eines Schieberventils ausgebildet, wobei dies die beste Lösung ist für das gleichmäßige Schaltverhalten unter verschiedenen Betriebsbedingungen und Druckverläufen.

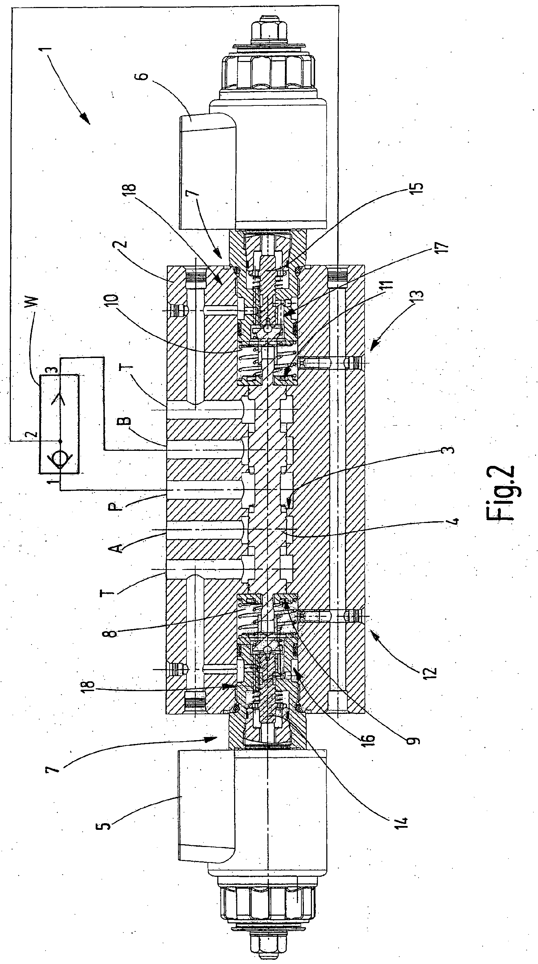

Wie insbesondere die Fig.2 zeigt, kann der Versorgungsdruck für die beiden Vorsteuerräume 8,10 nicht nur von dem Druckanschluß P, sondern auch über eine Kopplung der Verbraucheranschlüsse A,B und des Druckanschlusses P unter Zwischenschaltung eines Wechselventils W entweder direkt von dem Druckanschluß P oder einem der Verbraucheranschlüsse A,B abgegriffen werden, bevor das Druckmittel den Vorsteuerräumen 8,10 zugeführt wird. Durch diese konstruktive Maßnahme läßt sich die Ventilvorrichtung auch bei abgeschalteter Druckmittelpumpe bedienen.

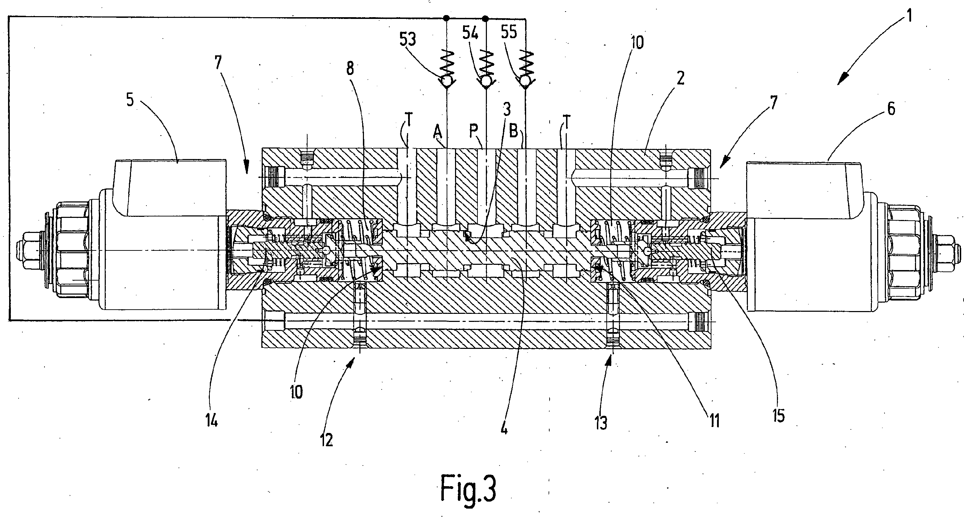

Es kann, wie dies insbesondere die Fig.3 zeigt, vorteilhaft sein, durch eine Parallelschaltung der genannten Anschlüsse P, A, B über jeweils ein in Richtung der Vorsteuerräume 8,10 öffnendes Rückschlagventil 53,54,55 zwischen den Anschlüssen den höchsten, verfügbaren Druckmitteldruck abzugreifen.

Die dahingehend vorgesteuerte Ventilvorrichtung 1 benötigt keine Wegsensoren für den Ventilkolben 4, ferner ist auch keine Auswerte- und Regelelektronik zwingend notwendig. Die Ventilvorrichtung 1 baut somit konstruktiv einfach auf und weist aufgrund ihrer mechanischen Auslegung eine geringe Störanfälligkeit auf. Bei einer Unterbrechung der Stromzufuhr der Elektromagnete 5,6, beispielsweise im Schadensfall, fährt der Ventilkolben 4 von sich aus in seine federzentrierte, sperrende Mittelstellung zurück.

## Patentansprüche

1. Ventilvorrichtung
- mit einem Ventilgehäuse (2) und
- mit einem, in einer Kolbenbohrung (3) des Ventilgehäuses (2) axial verschiebbar angeordneten Ventilkolben (4), über den ein erster Verbraucheranschluß (A) und ein zweiter Verbraucheranschluß (B) wechselweise mit einem Druckanschluß (P) und mit einem Tankanschluß (T1,T2) durch die Wirkung eines ersten Elektromagneten (5) und eines zweiten Elektromagneten (6) verbindbar sind,
- wobei der Ventilkolben (4) aus einer zentrierten, mittleren Ruhestellung zur Verbindung des ersten Verbraucheranschlusses (A) mit dem Druckanschluß (P) und des zweiten Verbraucheranschlusses (B) mit dem Tankanschluß (T1,T2) in eine erste Richtung und zur umgekehrten fluidführenden Verbindung der Anschlüsse (A,B,P,T1,T2) in eine entgegengesetzte Richtung verschiebbar ist,
- wobei eine Vorsteuerung (7) vorgesehen ist, die einen ersten Vorsteuerraum (8) aufweist, der eine erste Kolbenrückseite (9) des Ventilkolbens (4) mit einer Druckkraft beaufschlagt, und die einen zweiten Vorsteuerraum (10) aufweist, der eine zweite Kolbenrückseite (11) des Ventilkolbens (4) mit einer Druckkraft beaufschlagt,
- wobei der erste und zweite Vorsteuerraum (8,10) mit je einer fluidführenden Verbindung (12,13) mit dem Druckanschluß (P) verbindbar sind,
- wobei ein erster Vorsteuerkolben (14) und ein zweiter Vorsteuerkolben (15) vorgesehen sind, die jeweils eine fluidführende Verbindung (16,17) zwischen den Vorsteuerräumen (8,10) und dem Tankanschluß (T1,T2) freigeben oder sperren,
- wobei die Vorsteuerung (7) in der Art eines Schieberventils (18) ausgebildet ist,
- wobei mindestens ein Vorsteuerkolben (14,15) einen Ringkanal (19) an seiner Außenumfangsfläche (20) aufweist, der eine fluidführende Verbindung (16,17) zwischen dem jeweiligen Vorsteuerraum (8,10) und dem jeweils zugeordneten Tankanschluß (T1,T2) steuert, und
- wobei der jeweilige Vorsteuerkolben (14,15) von dem jeweils zugeordneten Elektromagneten (5,6) mit einer Schubkraft beaufschlagbar ist, um ein Öffnen der fluidführenden Verbindung (16,17) von dem jeweiligen Vorsteuerraum (8,10) zu dem zugeordneten Tankanschluß (T1,T2) zu bewirken, **dadurch gekennzeichnet, dass** von den jeweiligen Vorsteuerräumen (8, 10) fluidführende Verbindungen (16, 17) in Form schmaler Längskanäle (35) mit je einem radialen, in der Länge kurz gehaltenen Stichkanal (36) zum jeweiligen Ringkanal (19) führen, und dass zu den fluidführenden Verbindungen (16, 17) von den Vorsteuerräumen (8, 10) kommend zu jeweils einem Tankanschluss (T1, T2) jeweils weitere, den kürzeren Stichkanälen (36) gegenüberliegende Stichkanäle (37) und Längskanäle (38) gehören, die zu dem jeweiligen Tankanschluss (T1, T2) in dem Ventilgehäuse (2) führen.

2. Ventilvorrichtung nach Anspruch 1, **dadurch gekennzeichnet, dass** die jeweiligen Vorsteuerräume (8, 10) fluidführend jeweils mit Stichkanälen (29, 30) verbunden sind, die in radialer Richtung das Ventilgehäuse (2) durchgreifend an eine gemeinsame Druckanschlussbohrung (31) angeschlossen sind, die in axialer Richtung das Ventilgehäuse (2) vorzugsweise bis zu seinen beiden freien Stirnseiten hin durchgreift.

3. Ventilvorrichtung nach Anspruch 1 oder 2, **dadurch gekennzeichnet, dass** die Stichkanäle (29, 30) und die Druckanschlussbohrung (31) eine erste und zweite fluidführende Verbindung (12, 13) für die beiden Vorsteuerräume (8, 10) ausbilden und mit dem Steuer- oder Pumpenanschlussdruck (P) beaufschlagbar sind.

4. Ventilvorrichtung nach einem der vorhergehenden Ansprüche, **dadurch gekennzeichnet, dass** zwischen dem Ventilkolben (4) und jedem Vorsteuerkolben (14,15) eine Druckfeder (21) angeordnet ist und der Kolbenhub des Ventilkolbens (4) bei geöffneter Vorsteuerung (7) proportional dem Magnetstrom des ansteuernden Elektromagneten (5,6) ist.

5. Ventilvorrichtung nach einem der vorhergehenden Ansprüche, **dadurch gekennzeichnet, dass** an einem freien Ende jedes Vorsteuerkolbens (14,15) eine Anlagekugel (22) vorgesehen ist, die den Vorsteuerkolben (14,15) mit einem Anlagestück (23) des Ventilkolbens (4) verbindet.

6. Ventilvorrichtung nach Anspruch 5, **dadurch gekennzeichnet, dass** das Anlagestück (23) jeweils unter Zwischenschaltung der Druckfeder (21) an dem Ventilkolben (4) anliegt.

7. Ventilvorrichtung nach einem der vorhergehenden Ansprüche, **dadurch gekennzeichnet, dass** jeweils eine Druckfeder (24) vorgesehen ist, um den jeweiligen Vorsteuerkolben (14,15) in eine geschlossene Position der Vorsteuerung (7) zu bewegen.

8. Ventilvorrichtung nach einem der vorhergehenden Ansprüche, **dadurch gekennzeichnet, dass** jeweils eine Druckfeder (25) an den Enden des Ventilkolbens (4) vorgesehen ist, um den Ventilkolben (4) in einer Neutralposition zu halten.

9. Ventilvorrichtung nach einem der vorhergehenden Ansprüche, **dadurch gekennzeichnet, dass** die fluidführende Verbindung (16,17) zwischen jedem Vorsteuerraum (8,10) und dem zugeordneten Tankanschluß (T1,T2) in dem Ventilgehäuse (4) angeordnet ist.

10. Ventilvorrichtung nach einem der vorhergehenden Ansprüche, **dadurch gekennzeichnet, dass** die Vorsteuerräume (8,10) unter Zwischenschaltung eines Wechselventils (W) mit einem Verbraucheranschluß (A,B) oder dem Druckanschluß (P) verbindbar sind.

## Claims

1. A valve device
- comprising a valve housing (2) and
- comprising a valve piston (4) which is arranged such that it can move axially within a piston bore (3) of the valve housing (2) and via which a first load connection (A) and a second load connection (B) can be alternately connected to a pressure connection (P) and to a tank connection (T1, T2) by the action of a first electromagnet (5) and a second electromagnet (6),
- the valve piston (4) being able to be moved out of a centred, middle rest position for connecting the first load connection (A) to the pressure connection (P) and the second load connection (B) to the tank connection (T1, T2) in a first direction, and for reversed fluid-conveying connection of the connections (A, B, P, T1, T2) being able to be moved in an opposite direction,
- a pilot control unit (7) being provided which has a first pilot chamber (8) which applies a compressive force to a first piston rear side (9) of the valve piston (4) and which has a second pilot chamber (10) which applies a compressive force to a second piston rear side (11) of the valve piston (4),
- the first and the second pilot chamber (8, 10), each with one fluid-conveying connection (12, 13), being able to be connected to the pressure connection (P),
- a first pilot piston (14) and a second pilot piston (15) being provided which respectively clear or block one fluid-conveying connection (16, 17) between the pilot chambers (8, 10) and the tank connection (T1, T2),
- the pilot control unit (7) being made in the manner of a spool valve (18),
- at least one pilot piston (14, 15) having an annular channel (19) on its outer peripheral surface (20) which controls a fluid-conveying connection (16, 17) between the respective pilot chamber (8, 10) and the respectively assigned tank connection (T1, T2), and
- a thrust force being able to be applied to the respective pilot piston (14, 15) by the respectively assigned electromagnet (5, 6) in order to bring about opening of the fluid-conveying connection (16, 17) from the respective pilot chamber (8, 10) to the assigned tank connection (T1, T2), **characterised in that** from the respective pilot chambers (8, 10), fluid-conveying connections (16, 17) in the form of narrow longitudinal channels (35), each with one radial branch duct (36) which is kept short in length, lead to the respective annular channel (19), and that coming from the pilot chambers (8, 10) to the fluid-conveying connections (16, 17), one respective tank connection (T1, T2) includes respective other branch ducts (37) and longitudinal channels (38) which are opposite the shorter branch ducts (36) and which lead to the respective tank connection (T1, T2) in the valve housing (2).

2. The valve device according to Claim 1, **characterised in that** the respective pilot chambers (8, 10) are connected such as to convey fluid to branch ducts (29, 30) which, penetrating the valve housing (2) in the radial direction, are connected to a common pressure connection bore (31) which in the axial direction of the valve housing (2) extends preferably to its two free face sides.

3. The valve device according to Claim 1 or 2, **characterised in that** the branch ducts (29, 30) and the pressure connection bore (31) form a first and a second fluid-conveying connection (12, 13) for the two pilot chambers (8, 10) and can be supplied with the control or pump connection pressure (P).

4. The valve device according to any of the preceding claims, **characterised in that** a compression spring (21) is disposed between the valve piston (4) and each pilot piston (14, 15) and the piston stroke of the valve piston (4) is proportional to the magnet current of the triggering electromagnet (5, 6) when the pilot control unit (7) is open.

5. The valve device according to any of the preceding claims, **characterised in that** a stop ball (22) is provided on one free end of each pilot piston (14, 15), which stop ball (22) connects the pilot piston (14, 15) to a stop piece (23) of the valve piston (4).

6. The valve device according to Claim 5, **characterised in that** the stop piece (23) respectively adjoins the valve piston (4) with interposition of the compression spring (21).

7. The valve device according to any of the preceding claims, **characterised in that** a respective compression spring (24) is provided to move the respective pilot piston (14, 15) into a closed position of the pilot control unit (7).

8. The valve device according to any of the preceding claims, **characterised in that** one compression spring (25) is respectively provided on the ends of the valve piston (4) in order to keep the valve piston (4) in a neutral position.

9. The valve device according to any of the preceding claims, **characterised in that** the fluid-conveying connection (16, 17) is disposed between each pilot chamber (8, 10) and the assigned tank connection (T1, T2) in the valve housing (4).

10. The valve device according to any of the preceding claims, **characterised in that** the pilot chambers (8, 10) can be connected to a load connection (A, B) or the pressure connection (P) with interposition of a shuttle valve (W).

## Revendications

1. Dispositif de soupape
- comprenant un corps (2) de soupape et
- comprenant un piston (4) de soupape, qui est monté coulissant axialement dans un alésage (3) pour piston du corps (2) de la soupape et par lequel un premier raccord (A) d'utilisateur et un deuxième raccord (B) d'utilisateur peuvent, par l'effet d'un premier électroaimant (5) et d'un deuxième électroaimant (6), communiquer en alternance avec un raccord (P) de pression et un raccord (T1, T2) de réservoir,
- dans lequel le piston (4) de la soupape peut coulisser d'une position de repos médiane centrée de mise en communication du premier raccord (A) d'utilisateur avec le raccord (P) de pression et du deuxième raccord (B) d'utilisateur avec le raccord (T1, T2) de réservoir dans un premier sens et pour la communication fluidique inversée des raccords (A, B, P, T1, T2) dans un sens contraire,
- dans lequel il est prévu une commande (7) pilote ayant un premier espace (8) pilote, qui soumet un premier côté (9) arrière du piston (4) de la soupape à une force de pression, et un deuxième espace (10) pilote, qui soumet une deuxième face arrière (11) du piston (4) de la soupape à une force de pression,
- dans lequel le premier et le deuxième espaces (8, 10) pilotes communiquent avec le raccord (P) de pression par respectivement une liaison (12, 13) fluidique,
- dans lequel il est prévu un premier piston (14) pilote et un deuxième piston (15) pilote, qui dégagent ou ferment chacun une liaison (16, 17) fluidique entre les espaces (8, 10) pilotes et le raccord (T1, T2) de réservoir,
- dans lequel la précommande (7) est constituée à la manière d'une soupape (18) à tiroir,
- dans lequel au moins un piston (14, 15) pilote a un canal (19) annulaire sur sa surface (20) périphérique extérieure, qui commande une liaison (16, 17) fluidique entre l'espace (8, 10) pilote respectif et le raccord (T1, T2) de réservoir associé respectivement et
- dans lequel le piston (14, 15) pilote respectif peut être soumis à une force de poussée par l'électroaimant (5, 6) associé respectivement pour provoquer une ouverture de la liaison (16, 17) fluidique de l'espace (8, 10) pilote respectif au raccord (T1, T2) de réservoir associé, **caractérisé en ce que** des espaces (8, 10) pilotes respectifs, des liaisons (16, 17) fluidiques, sous la forme de canaux (35) longitudinaux étroits, mènent, par respectivement un canal (36) d'embranchement radial maintenu court en longueur, au canal (19) annulaire respectif, et **en ce que**, appartiennent aux liaisons (16, 17) fluidiques, venant des espaces (8, 10) pilotes, en allant respectivement à un raccord (T1, T2) de réservoir, respectivement d'autres canaux (37) d'embranchement opposés aux canaux (36) d'embranchement plus courts et des canaux (38) longitudinaux, qui mènent dans le corps (2) de la soupape aux raccords (T1, T2) respectifs de réservoir.

2. Dispositif de soupape suivant la revendication 1, **caractérisé en ce que** les espaces (8, 10) pilotes communiquent fluidiquement chacun avec des canaux (29, 30) d'embranchement, qui, en passant dans l'enveloppe (2) de soupape dans la direction radiale, sont raccordés à un trou (31) commun de raccord de pression, qui passe dans l'enveloppe (2) de soupape dans la direction axiale, de préférence jusqu'à ses deux côtés frontaux libres.

3. Dispositif de soupape suivant la revendication 1 ou 2, **caractérisé en ce que** les canaux (29, 30) d'embranchement et le trou (31) de raccord de pression forment une première et une deuxième liaisons (12, 13) fluidiques pour les deux espaces (8, 10) pilotes et peuvent être soumis à la pression (P) de commande ou du raccord de pompe.

4. Dispositif de soupape suivant l'une des revendications précédentes, **caractérisé en ce qu'**un ressort (21) de compression est monté entre le piston (4) de soupape et chaque piston (14, 15) pilote et la course du piston (4) de soupape, lors d'un pilotage (7) en ouverture, est proportionnelle au courant des électroaimants (5, 6) d'excitation.

5. Dispositif de soupape suivant l'une des revendications précédentes, **caractérisé en ce qu'**il est prévu, à une extrémité libre de chaque piston (14, 15) pilote, une bille (22) de contact, qui relie le piston (14, 15) pilote à une pièce (23) de contact du piston (4) de soupape.

6. Dispositif de soupape suivant la revendication 5, **caractérisé en ce que** la pièce (23) de contact s'applique au piston (4) de soupape avec interposition du ressort (21) de compression.

7. Dispositif de soupape suivant l'une des revendications précédentes, **caractérisé en ce qu'**il est prévu respectivement un ressort (24) de compression pour mettre le piston (14, 15) pilote respectif dans une position fermée du pilotage (7).

8. Dispositif de soupape suivant l'une des revendications précédentes, **caractérisé en ce qu'**il est prévu respectivement un ressort (25) de compression aux extrémités du piston (4) de soupape pour maintenir le piston (4) de soupape dans une position neutre.

9. Dispositif de soupape suivant l'une des revendications précédentes, **caractérisé en ce que** la liaison (16, 17) fluidique est disposée dans l'enveloppe (4) de la soupape entre chaque espace (8, 10) pilote et le raccord (T1, T2) de réservoir associé.

10. Dispositif de soupape suivant l'une des revendications précédentes, **caractérisé en ce que** les espaces (8, 10) pilotes peuvent communiquer avec interposition d'une soupape (W) à deux voies avec un raccord (A, B) d'utilisateur ou avec le raccord (P) de pression.
